# EUROPEAN PATENT APPLICATION

(11) **EP 3 073 470 A1**
(43) Date of publication of application: **28.09.2016**
(21) Application number: 16161356.7
(22) Date of filing: 21.03.2016
(51) Int. Cl.: G09B 23/34

(54) **BLOOD VESSEL PHANTOM**

(30) Priority: 23.03.2015 JP 2015059281
(71) Applicant: Seiko Epson Corporation, Tokyo 163 (JP)
(72) Inventor: Sekino, Hirokazu, Nagano, 392-8502 (JP); Ito, Jiro, Nagano, 392-8502 (JP)
(74) Representative: Hoffmann Eitle

(57) **Abstract**

A simulated organ includes a coloring member. The coloring member is arranged inside a simulated blood vessel and presents a different color from the simulated blood vessel at a site exposed from the simulated blood vessel.

## Description

### BACKGROUND

### 1. Technical Field

The present invention relates to a simulated organ.

### 2. Related Art

A simulated tissue (soft tissue incision practice model) which, when incised, leaks simulated blood from an incision wound so as to enable realistic experience in practice operations and which enables practicing blood removal and hemostasis necessary when bleeding has occurred, is known (Japanese Utility Model Registration No.3,184,695).

In the related-art technique, since simulated blood is contained in a simulated blood vessel, handling of the simulated blood, which is a liquid, is troublesome.

### SUMMARY

An advantage of some aspects of the invention is that whether a simulated blood vessel is damaged or not can be shown comprehensibly without using simulated blood.

The invention can be implemented in the following forms.

(1) An aspect of the invention provides a simulated organ. The simulated organ includes: a hollow simulated blood vessel; and a coloring member which is arranged inside the simulated blood vessel and presents a different color from the simulated blood vessel at a damaged site of the simulated blood vessel. According to this configuration, any damage to the simulated blood vessel can be shown comprehensibly to the user.

(2) In the aspect, the coloring member may be an inner layer member formed in a different color from the simulated blood vessel. According to this configuration, the coloring member can be formed easily.

(3) In the aspect, the inner layer member may have a higher strength than the simulated blood vessel. According to this configuration, the loss of the coloring function due to damage to the inner layer member as well as to the simulated blood vessel is restrained.

(4) In the aspect, the coloring member may be a plurality of particles. According to this configuration, any damage to the simulated blood vessel can be shown to the user more comprehensibly. This is because the coloring member, which is a plurality of particles, is discharged outside the simulated blood vessel from the damaged site.

(5) In the aspect, the simulated organ may include an inner layer member arranged inside the simulated blood vessel. The coloring member may be arranged between the simulated blood vessel and the inner layer member. According to this configuration, the inside of the simulated blood vessel need not be filled with the coloring member.

(6) In the aspect, the color presented by the coloring member may be a fluorescent color. According to this configuration, any damage to the simulated blood vessel can be shown to the user more comprehensibly.

(7) In the aspect, the color presented by the coloring member may be a color after color change due to a coloring reaction occurring after the simulated blood vessel is damaged. According to this configuration, any damage to the simulated blood vessel can be shown to the user more comprehensibly.

(8) In the aspect, a tensile residual stress in a circumferential direction may be generated in the simulated blood vessel. According to this configuration, any damage to the simulated blood vessel can be shown to the user more comprehensibly. This is because, since a tensile residual stress in the circumferential direction is generated in the simulated blood vessel, if the simulated blood vessel is damaged, the damaged site expands spontaneously.

(9) In the aspect, the simulated organ may include a simulated tissue filling peripheries of the simulated blood vessel. The simulated tissue may be excised by a liquid provided with an excision capability. According to this configuration, the simulated organ can be used in a surgical simulation using a liquid provided with an excision capability.

The invention can also be implemented in various other forms. For example, the invention can be implemented as a method for preparing a simulated organ.

### BRIEF DESCRIPTION OF THE DRAWINGS

The invention will be described with reference to the accompanying drawings, wherein like numbers reference like elements.
FIG. 1 shows the schematic configuration of a liquid ejection device.
FIG. 2 is a cross-sectional view showing a simulated organ.
FIG. 3 is a cross-sectional view showing the state where a part of a simulated blood vessel is damaged.
FIG. 4 is a top view showing the state where a part of the simulated blood vessel is damaged.
FIG. 5 is a flowchart showing a method for preparing a simulated organ.
FIG. 6 shows how a strength test on the material of an inner layer member is conducted.
FIG. 7 is a graph showing experiment data obtained by the strength test.
FIG. 8 is a cross-sectional view taken along 8-8 in FIG. 2.
FIG. 9 is a cross-sectional view showing an embedded member (modification).
FIG. 10 is a cross-sectional view showing the state where a simulated blood vessel is damaged.
FIG. 11 is a cross-sectional view showing an embedded member.
FIG. 12 is a cross-sectional view showing the state where a simulated blood vessel is damaged.
FIG. 13 is a cross-sectional view showing an inner layer member and a simulated blood vessel.
FIG. 14 is a cross-sectional view showing how the inner layer member is inserted into the hollow part of the simulated blood vessel.
FIG. 15 is a cross-sectional view showing an embedded member.
FIG. 16 is a cross-sectional view showing residual stresses (taken along 16-16 in FIG. 15).
FIG. 17 is a cross-sectional view showing the state where the simulated blood vessel is damaged.
FIG. 18 is a top view showing the state where the simulated blood vessel is damaged.

### DESCRIPTION OF EXEMPLARY EMBODIMENTS

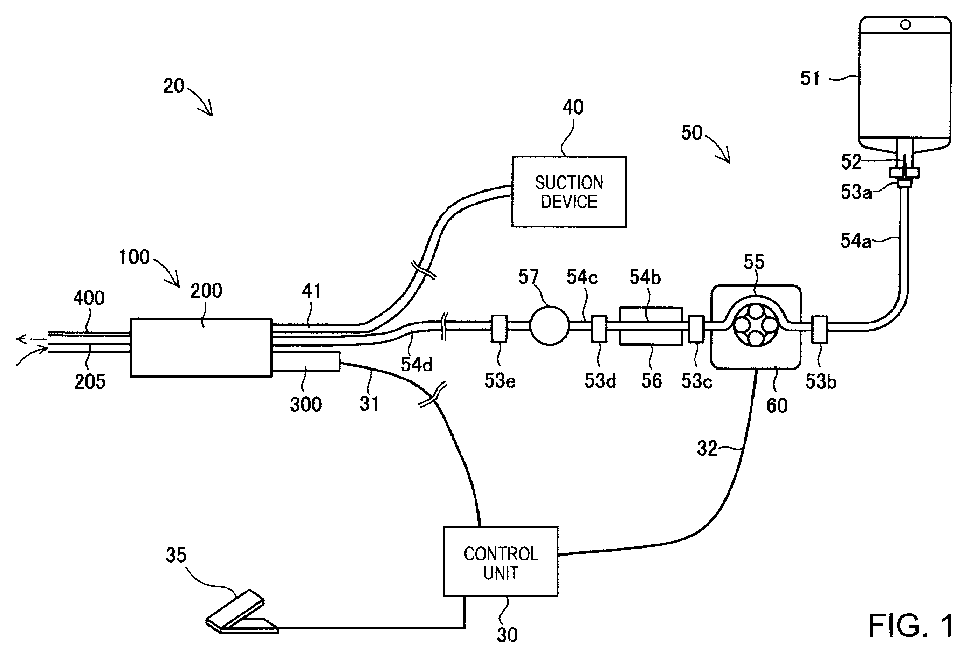

FIG. 1 schematically shows the configuration of a liquid ejection device 20. The liquid ejection device 20 is a medical device used in a medical institution and has the function of excising an affected part by ejecting a liquid to the affected part.

The liquid ejection device 20 has a control unit 30, an actuator cable 31, a pump cable 32, a foot switch 35, a suction device 40, a suction tube 41, a liquid supply device 50, and a handpiece 100.

The liquid supply device 50 has a water supply bag 51, a spike 52, first to fifth connectors 53a to 53e, first to fourth water supply tubes 54a to 54d, a pump tube 55, a blocking detection mechanism 56, and a filter 57. The handpiece 100 has a nozzle unit 200 and an actuator unit 300. The nozzle unit 200 has an ejection tube 205 and a suction tube 400.

The water supply bag 51 is made of a transparent synthetic resin and its inside is filled with a liquid (specifically, physiological saline solution). In this description, this bag is called the water supply bag 51 even if it is filled with a liquid other than water. The spike 52 is connected to the first water supply tube 54a via the first connector 53a. As the spike 52 stings the water supply bag 51, the liquid filling the water supply bag 51 becomes available to be supplied to the first water supply tube 54a.

The first water supply tube 54a is connected to the pump tube 55 via the second connector 53b. The pump tube 55 is connected to the second water supply tube 54b via the third connector 53c. A tube pump 60 has the pump tube 55 inserted therein. The tube pump 60 feeds the liquid inside the pump tube 55 from the side of the first water supply tube 54a toward the second water supply tube 54b.

The blocking detection mechanism 56 measures the pressure inside the second water supply tube 54b and thereby detects blocking inside the first to fourth water supply tubes 54a to 54d.

The second water supply tube 54b is connected to the third water supply tube 54c via the fourth connector 53d. To the third water supply tube 54c, the filter 57 is connected. The filter 57 collects foreign matters contained in the liquid.

The third water supply tube 54c is connected to the fourth water supply tube 54d via the fifth connector 53e. The fourth water supply tube 54d is connected to the nozzle unit 200. The liquid supplied through the fourth water supply tube 54d is intermittently ejected from the tip of the ejection tube 205 by the driving of the actuator unit 300. As the liquid is thus ejected intermittently, an excision capability can be secured with a low flow rate.

The ejection tube 205 and the suction tube 400 form a double-tube structure with the ejection tube 205 being the inner tube and the suction tube 400 being the outer tube. The suction tube 41 is connected to the nozzle unit 200. The suction device 40 sucks the content inside the suction tube 400 through the suction tube 41. By this suction, the liquid and excised piece or the like near the tip of the suction tube 400 are sucked.

The control unit 30 controls the tube pump 60 and the actuator unit 300. Specifically, the control unit 30 transmits drive signals via the actuator cable 31 and the pump cable 32 while the foot switch 35 is pressed down with a foot. The drive signal transmitted via the actuator cable 31 drives a piezoelectric element (not illustrated) included in the actuator unit 300. The drive signal transmitted via the pump cable 32 drives the tube pump 60. Therefore, while the user keeps his or her foot down on the foot switch 35, the liquid is intermittently ejected. When the user does not keep his or her foot down on the foot switch 35, the ejection of the liquid stops.

A simulated organ will be described hereafter. A simulated organ is also called a phantom. In this embodiment, a simulated organ is an artificial object whose part is to be excised by the liquid ejection device 20. The simulated organ in this embodiment is used in a surgical simulation for the purpose of performance evaluation of the liquid ejection device 20, practice of operation of the liquid ejection device 20, and the like.

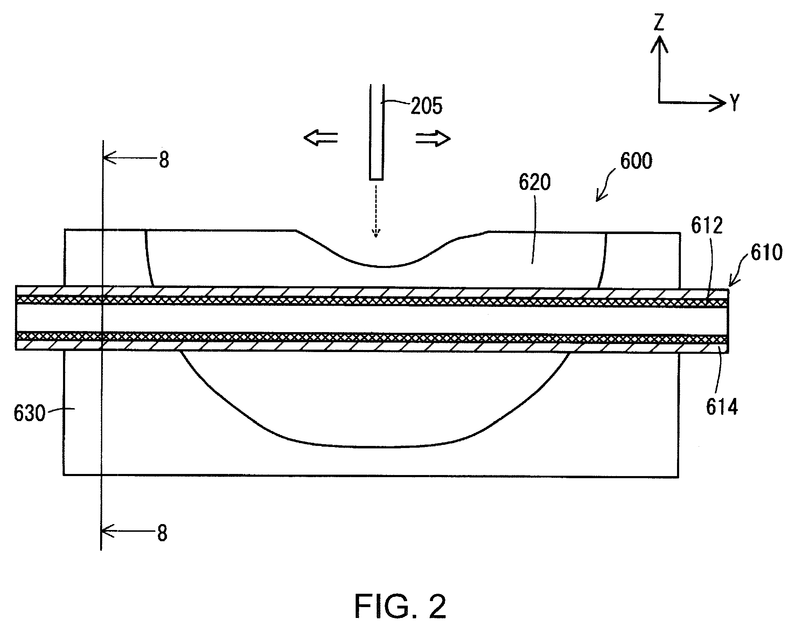

FIG. 2 is a cross-sectional view showing a simulated organ 600. The cross section shown in FIG. 2 is a Y-Z plane. In this embodiment, the horizontal plane is defined as an X-Y plane, and the vertical direction (direction of depth) is defined as a Z-direction. The simulated organ 600 includes an embedded member 610, a simulated tissue 620, and a support member 630.

The embedded member 610 has a double structure in which a simulated blood vessel 614 surrounds the outside of an inner layer member 612. It can also be said that the inner layer member 612 is arranged inside the simulated blood vessel 614. The simulated blood vessel 614 is formed of a material simulating a blood vessel in a living body. The simulated blood vessel 614 is an artificial object simulating a blood vessel in a living body (for example, human cerebral blood vessel) and is a member that should avoid damage in a surgical simulation.

The inner layer member 612 in this embodiment is a hollow member. The flexibility of the inner layer member 612 is approximately the same as the flexibility of the simulated blood vessel 614. The strength of the inner layer member 612 is higher than the strength of the simulated blood vessel 614. This is for the purpose of making the inner layer member 612 harder to damage than the simulated blood vessel 614.

As the color of the inner layer member 612, a color that is expansive and can be easily discriminated from the simulated blood vessel 614 is selected. In this embodiment, the inner layer member 612 is yellow or red, and the simulated blood vessel 614 is black. With such color selection, the inner layer member 612 can be easily discriminated from the simulated blood vessel 614 and visually recognized.

The simulated tissue 620 is an artificial object simulating peripheral tissues around a blood vessel in a living body (for example, brain tissues) and fills the peripheries of the simulated blood vessel 614. The simulated tissue 620 in this embodiment is white. The reason for forming the simulated tissue 620 in white is that the color makes the simulated tissue 620 easier to discriminate from the inner layer member 612 and the simulated blood vessel 614. The support member 630 is a metallic container which supports the embedded member 610 and the simulated tissue 620.

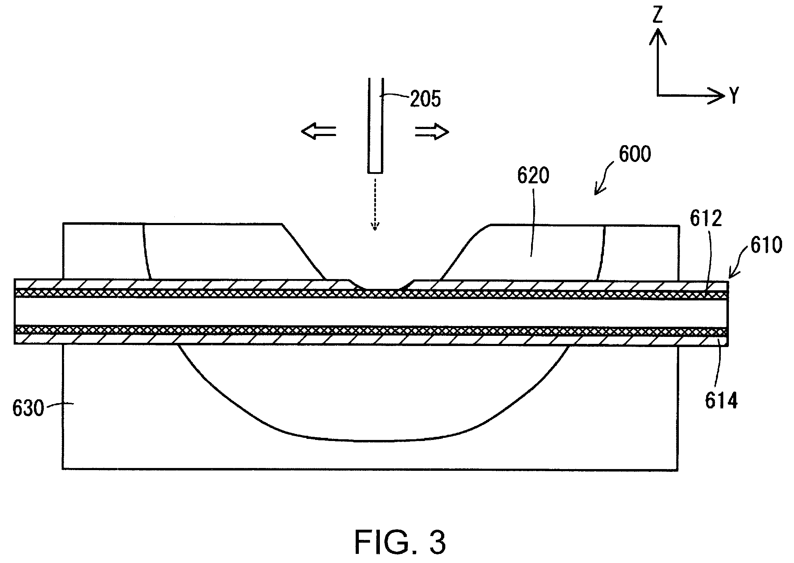

The liquid ejected intermittently from the ejection tube 205 gradually excises the simulated tissue 620. As the excision proceeds, the simulated blood vessel 614 becomes exposed. The exposed simulated blood vessel 614 may be subjected to the liquid ejection in some cases. The simulated blood vessel 614 becomes damaged when subjected to the ejection under conditions exceeding its strength, as shown in FIG. 3. The damage here refers to the formation of a penetration hole in a part of the wall.

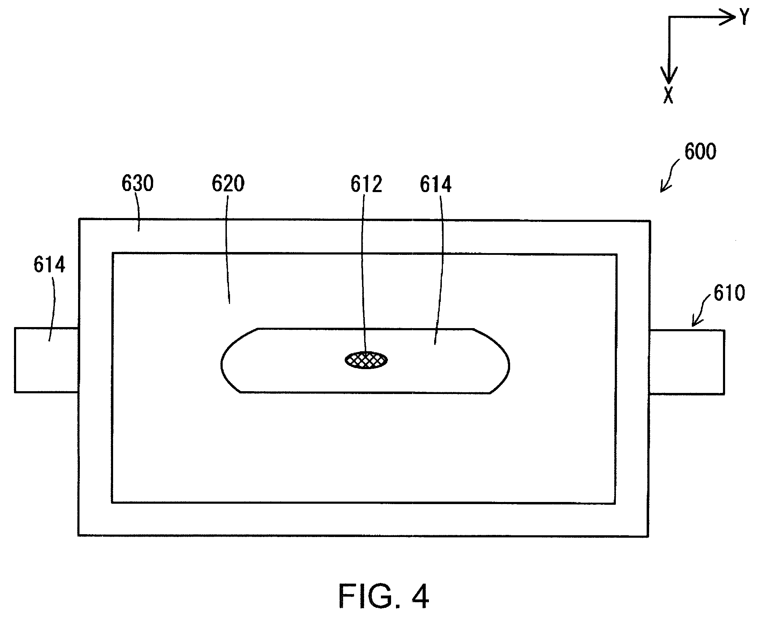

FIG. 4 shows the state where a part of the simulated blood vessel 614 is damaged, as viewed from above. At the damaged site of the simulated blood vessel 614, the inner layer member 612 is exposed. The user can grasp that the simulated blood vessel 614 is damaged, by visually recognizing the inner layer member 612. As described above, since the simulated blood vessel 614 and the inner layer member 612 have different colors from each other, the exposed inner layer member 612 can be easily discriminated from the simulated blood vessel 614 and visually recognized.

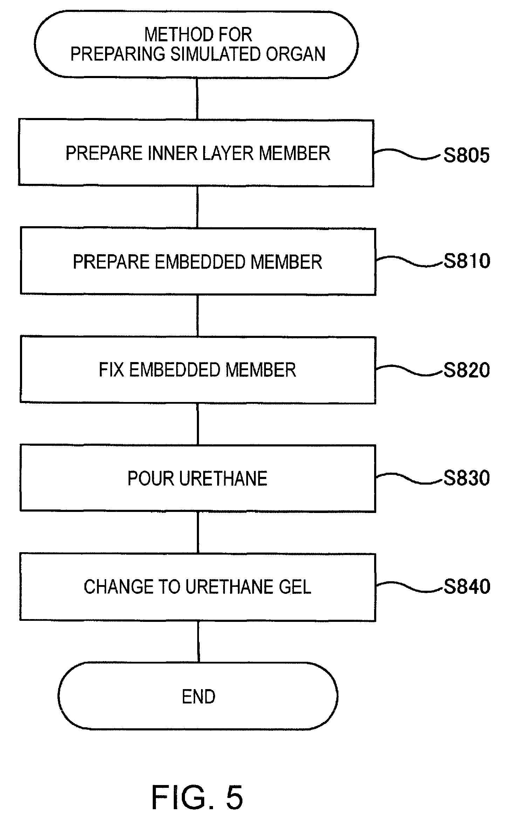

FIG. 5 is a flowchart showing a method for preparing the simulated organ 600. First, the inner layer member 612 is prepared (S805). As described above, the inner layer member 612 is prepared in such a way as to have a higher strength than the simulated blood vessel 614. The strength of the inner layer member 612 will be described hereinafter.

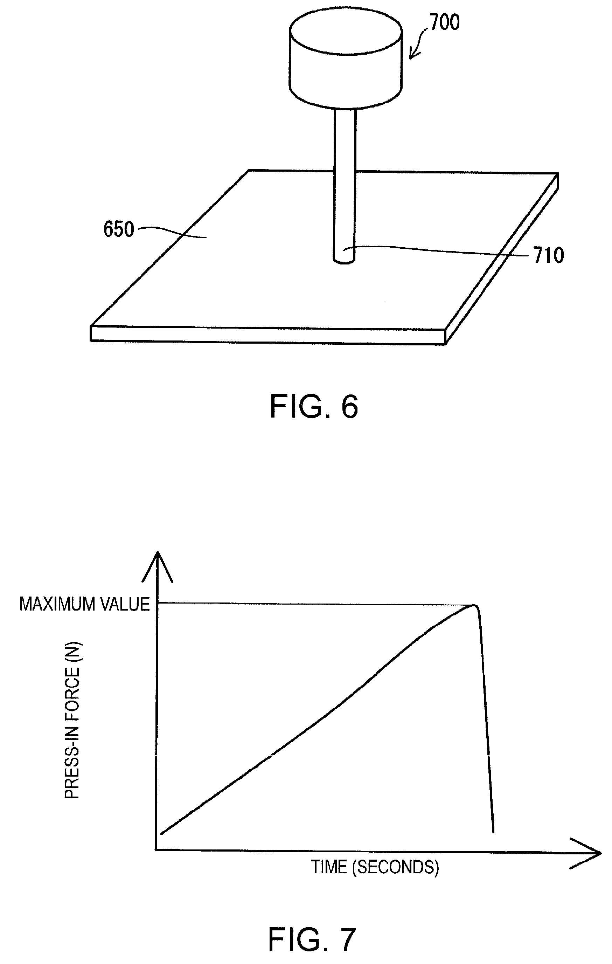

FIG. 6 is a view for explaining a strength test on a material. A sheet 650 is a test sample formed by shaping the material of the inner layer member 612 into a sheet. The sheet 650 is placed on a table (not illustrated) and fixed to the table at its peripheral edges. The table has a hole opening at a position opposite to a pin 700 via the sheet 650. In the strength test, the pin 700 is pressed into the sheet 650 so as to deform the sheet 650 until the sheet 650 breaks. A load cell (not illustrated) is used to press in the pin 700, and the press-in force is measured in real time.

FIG. 7 shows an example of experiment data obtained from the strength test. The vertical axis represents press-in force. The horizontal axis represents time. The pressing of the pin 700 is carried out at 1 mm/sec. Therefore, the press-in force increases almost linearly with time, as shown in FIG. 7.

The press-in force increases in this manner and eventually drops sharply. The sharp drop in the press-in force occurs because of the breaking of the sheet 650. Based on the sharp drop in the press-in force, the maximum value of the press-in force can be decided. The material strength is acquired as a stress value (MPa) by dividing the maximum value (N) of the press-in force by the area of a tip 710 of the pin 700 (in this embodiment, 0.5 mm²).

By this test, the material of the sheet 650 is prepared in such a way that it has a thickness of 0.5 mm and a strength of 1 MPa or above. An oil-based urethane or rubber material as an example of the material of the sheet 650 can be changed in strength by changing preparation conditions. Using the material thus prepared, the inner layer member 612 is prepared.

Since the inner layer member 612 is hollow, the following manufacturing method is employed. That is, the material before hardening is applied to the outer circumferences of an extra fine wire, and the extra fine wire is pulled out after the hardening of the material. The outer diameter of the extra fine wire is made to correspond to the inner diameter of the inner layer member 612. The extra fine wire is made of metal, and for example, formed by a piano wire. The wall thickness of the inner layer member 612 is made approximately the same as the thickness of the sheet 650. Thus, the strength of the inner layer member 612 is supposed to be approximately the same as the strength measured in the strength test.

Next, the embedded member 610 is prepared (S810). That is, the simulated blood vessel 614 is formed around the inner layer member 612. Specifically, the material of the simulated blood vessel 614 before hardening is applied to the outer circumference of the inner layer member 612 with a paintbrush, and then hardened. The embedded member 610 is thus formed.

In this embodiment, PVA (polyvinyl alcohol) is employed as the material of the simulated blood vessel 614. As already known, PVA can be changed in strength by changing preparation conditions. Using this characteristic, the simulated blood vessel 614 is prepared in such a way as to have a strength close to the strength of the blood vessel to be reproduced. The adjustment of the strength is executed using the above strength test.

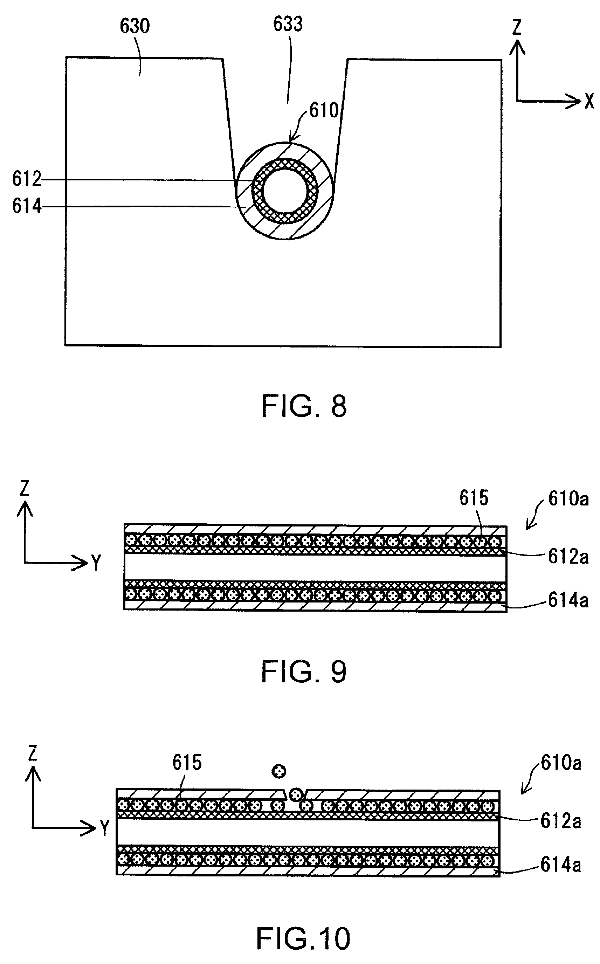

Next, the embedded member 610 is fixed to the support member 630 (S820). FIG. 8 shows a cross section taken along 8-8 in FIG. 2 (Z-X plane) and shows the state where S820 has been executed.

As shown in FIG. 8, a groove 633 is provided in the support member 630. The embedded member 610 is fitted into the groove 633 in S820 and thus fixed to the support member 630.

Next, a stirred mixture of a base resin of urethane and a hardener is poured into the support member 630 (S830). Subsequently, the urethane changes into a urethane gel in the form of an elastomer gel (S840). Thus, the simulated tissue 620 is formed and the simulated organ 600 is completed.

A modification will be described below. FIG. 9 is a cross-sectional view showing an embedded member 610a. The embedded member 610a includes an inner layer member 612a, a simulated blood vessel 614a, and a plurality of fluorescent particles 615. As shown in FIG. 9, the fluorescent particles 615 are held between the inner layer member 612a and the simulated blood vessel 614a. It can also be said that the fluorescent particles 615 are arranged inside the simulated blood vessel 614a.

FIG. 10 is a cross-sectional view showing the state where the simulated blood vessel 614a has been damaged. As the simulated blood vessel 614a is damaged, the fluorescent particles 615 are discharged from the damaged site. The fluorescent particles 615 emit fluorescence, using visible light as excitation light. The user can grasp that the damage has occurred, and the damaged site, by visually recognizing the discharged fluorescent particles 615.

As the fluorescent color of the fluorescent particles 615, red is employed so that the fluorescent particles 615 can be highly visible. The diameter of each fluorescent particle 615 is 0.025 µm to 30 µm. The diameters of the fluorescent particles 615 may be uniform or non-uniform. The simulated blood vessel 614a is formed in black so that the fluorescent particles 615 can be highly visible. The inner layer member 612a is formed in white because the inner layer member 612a need not be highly visible.

A method for preparing the embedded member 610a will be described. After S805 (FIG. 5), the fluorescent particles 615 are attached to the outside of the prepared inner layer member 612a. As the attachment force for this attachment, the adhesiveness provided in the inner layer member 612a is utilized. If the adhesiveness is insufficient as the attachment force, a viscous liquid may be applied to the outside of the inner layer member 612a to supplement the attachment force.

Subsequently, as S810, the simulated blood vessel 614a is formed on the outside of the fluorescent particles 615. The embedded member 610a is thus prepared.

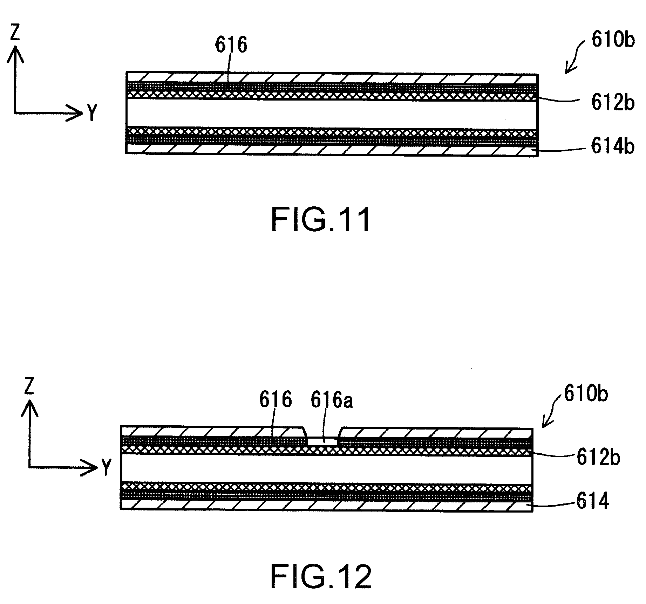

Another modification will be described. FIG. 11 is a cross-sectional view showing an embedded member 610b. The embedded member 610b includes an inner layer member 612b, a simulated blood vessel 614b, and a coloring reaction layer 616. The coloring reaction layer 616 contains silver ions and is held between the inner layer member 612b and the simulated blood vessel 614b, as shown in FIG. 11.

FIG. 12 is a cross-sectional view showing the state where the simulated blood vessel 614b has been damaged. As the simulated blood vessel 614b is damaged, the coloring reaction layer 616 is exposed at the damaged site. The coloring reaction layer 616 is subjected to a physiological saline solution at the exposed site. As the silver ions contained in the coloring reaction layer 616 and chloride ions contained in the physiological saline solution react, silver chloride is generated. The resulting silver chloride is shown as a coloring reaction site 616a in FIG. 12.

Silver chloride is white and therefore can be easily discriminated from the black simulated blood vessel 614b. Therefore, the user can easily grasp that the damage has occurred, and the damaged site, by seeing the coloring reaction site 616a changed into white.

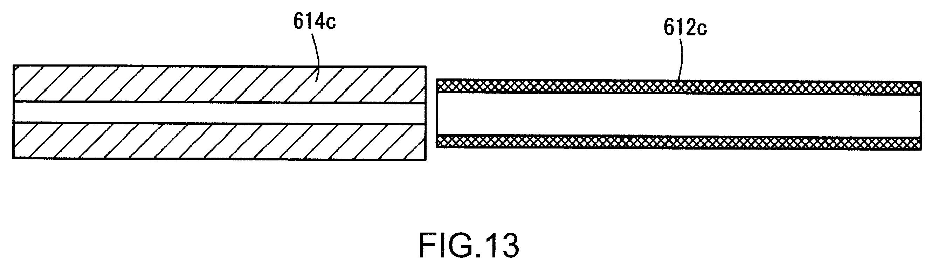

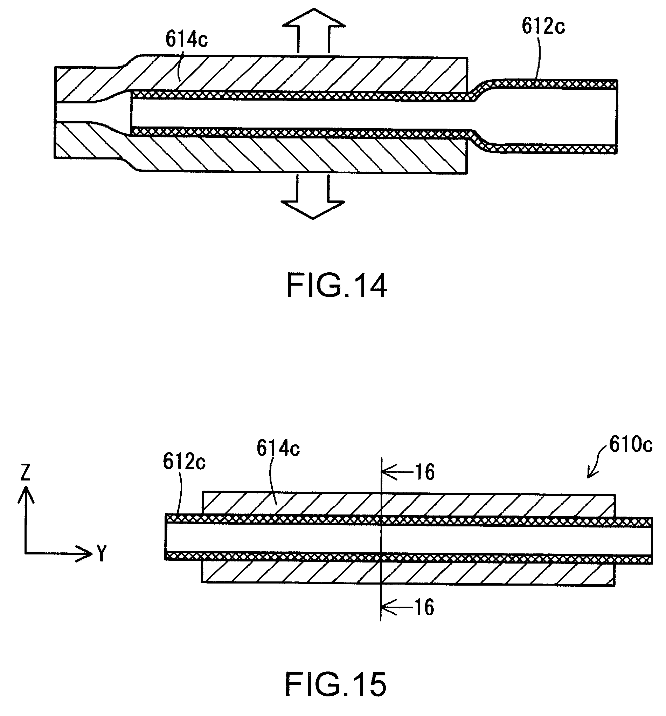

A still another modification will be described. FIG. 13 is a cross-sectional view showing an inner layer member 612c and a simulated blood vessel 614c. An embedded member 610c (see FIG. 15) is prepared by having the inner layer member 612c inserted into the hollow part of the simulated blood vessel 614c. As shown in FIG. 13, the outer diameter of the inner layer member 612c is greater than the inner diameter of the simulated blood vessel 614c.

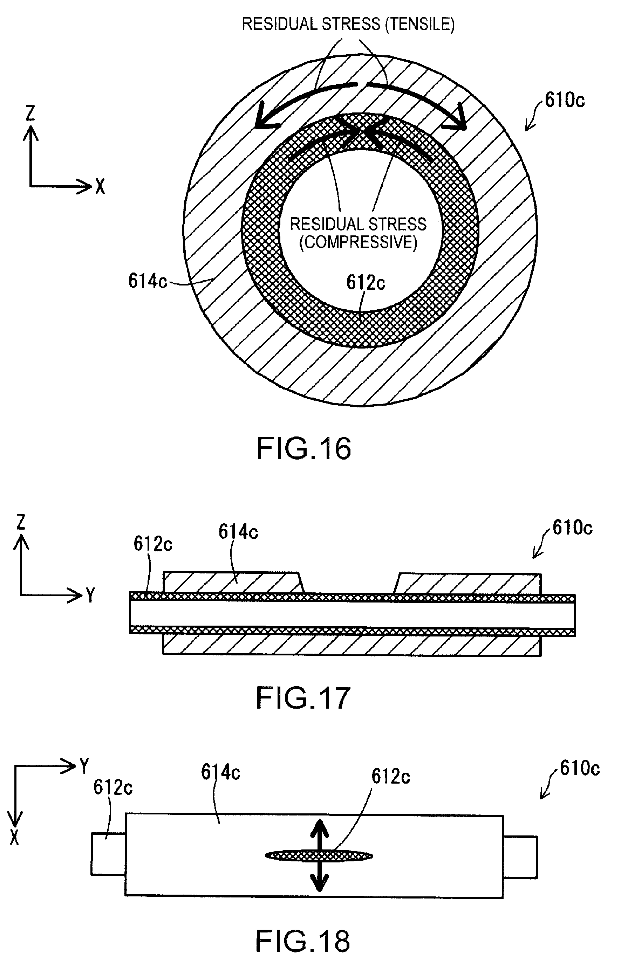

FIG. 14 is a cross-sectional view showing how the inner layer member 612c is inserted into the hollow part of the simulated blood vessel 614c. Since the outer diameter of the inner layer member 612c is greater than the inner diameter of the simulated blood vessel 614c, at the time of the insertion, the outer diameter and inner diameter of the inner layer member 612c contract and the outer diameter and inner diameter of the simulated blood vessel 614c expand, as shown in FIG. 14. Consequently, residual stresses occur in the inner layer member 612c and the simulated blood vessel 614c (see FIG. 16). As the insertion is completed, the embedded member 610c is produced, as shown in FIG. 15.

As described above, the simulated blood vessel 614c is separately prepared before the insertion of the inner layer member 612c. The preparation of the simulated blood vessel 614c is carried out by a technique similar to the preparation of the inner layer member 612 (S805) described in the embodiment.

FIG. 16 is a view for explaining the residual stresses, showing a cross section taken along 16-16 in FIG. 15. As shown in FIG. 16, a compressive residual stress in the circumferential direction occurs in the inner layer member 612c, and a tensile residual stress in the circumferential direction occurs in the simulated blood vessel 614c.

FIGS. 17 and 18 show the state where the simulated blood vessel 614c has been damaged. FIG. 17 is a cross-sectional view. FIG. 18 is a top view. When the simulated blood vessel 614c is damaged, the damaged site spontaneously expands because of the residual stresses. Consequently, the user can easily grasp that the damage has occurred, and the damaged site.

The invention is not limited to the embodiment, examples and modifications in this specification and can be implemented with various configurations without departing from the scope of the invention. For example, technical features described in the embodiment, examples and modifications corresponding to technical features of each configuration described in the summary of the invention can be replaced or combined according to need, in order to solve a part or all of the foregoing problems or in order to achieve a part or all of the advantageous effects. Technical features can be deleted according to need, unless described as essential in the specification. For example, the following examples can be employed.

The simulated organ may be excised by measures other than a liquid that is intermittently ejected. For example, the simulated organ may be excised by a liquid that is continuously ejected or by a liquid provided with an excision capability by ultrasonic waves or a metal scalpel. Alternatively, the simulated organ may be excised by a metallic surgical knife.

The number of the simulated blood vessels may be any number equal to or greater than two.

The material of the simulated blood vessel is not limited to the above example. For example, the material may be a synthetic resin other than PVA (for example, urethane) or may be a natural resin.

The material of the simulated tissue is not limited to the above example. For example, the material may be a rubber-based material other than urethane or may be PVA.

The simulated blood vessel may be prepared using ejection and deposition (3D printing by an inkjet method or the like).

The simulated tissue may be prepared using 3D printing.

The simulated blood vessel and the simulated tissue may be collectively prepared using 3D printing.

The simulated blood vessel may be prepared by depositing a material which is to form the simulated blood vessel on the inner layer member, using 3D printing.

The simulated blood vessel may be prepared by spraying a material which is to form the simulated blood vessel onto the inner layer member with a sprayer or the like.

The simulated blood vessel may be prepared by filling a tank with a material which is to form the simulated blood vessel, soaking the inner layer member therein, and then lifting the inner layer member up.

The shape in which the embedded member is embedded is not limited to the above example. For example, the embedded member may be bent into an S-shape or may be bent within the horizontal plane (X-Y plane).

The inner layer member or the simulated blood vessel need not be in a single color and may be in different colors at different sites. For example, a site near the end of the inner layer member may be formed in the same color as the simulated blood vessel, and a site near the site where damage to the simulated blood vessel tends to occur may be formed in a different color from the simulated blood vessel.

The inner layer member may be formed as a solid member.

The colors of the inner layer member, the fluorescent particles and the coloring reaction site as the coloring members may be any colors that are different from the color of the simulated blood vessel. For example, black, blue or the like may be used. Also, a fluorescent color may be used but need not be used.

The shape of the fluorescent particles need not be spherical. For example, the fluorescent particles may have a shape with pointed corners.

In the case where the fluorescent particles are used, the inner layer member need not be used. In this case, the fluorescent particles may fill the inside of the simulated blood vessel.

Particles that do not emit fluorescence may be used instead of the fluorescent particles.

The coloring reaction layer may present a color by reacting with substances other than chloride ions. For example, the coloring reaction layer may react with oxygen in the atmosphere or may react with a substance contained in the ejected liquid. For example, the coloring reaction layer may be made to contain litmus, and the liquid to be ejected may be prepared to be acidic or basic.

While the entire outer peripheral surface of the inner layer member 612, 612c is surrounded by the simulated blood vessel 614, 614c in the description, this is not limiting. The simulated blood vessel 614, 614c may cover a part of the outer peripheral surface of the inner layer member 612, 612c. A part of the outer peripheral surface of the inner layer member 612 refers to, for example, a part in the circumferential direction of the outer peripheral surface. It suffices that the inner layer member 612, 612c is covered by the simulated blood vessel 614, 614c to such an extent that the user does not visually recognize the inner layer member 612, 612c when the simulated blood vessel 614, 614c is not damaged in a surgical simulation.

In other words, the inner layer member 612, 612c may have a part arranged inside the simulated blood vessel 614, 614c (unexposed part) and a part exposed outside the simulated blood vessel 614, 614c (exposed part). Also, in order to form such an exposed part, a hole or cut-out may be formed at a part of the simulated blood vessel 614, 614c, or the inner layer member 612, 612c may stick out of the simulated blood vessel 614, 614c.

In the case where the fluorescent particles 615 or the coloring reaction layer 616 is used, the fluorescent particles 615 or the coloring reaction layer 616 is arranged between the inner layer member 612a and the simulated blood vessel 614a over the entire circumference of the inner layer member 612a and the simulated blood vessel 614a. However, this is not limiting. The fluorescent particles 615 or the coloring reaction layer 616 may be arranged at a part in the circumferential direction of the inner layer member 612a. In a surgical simulation, the fluorescent particles 615 need not be arranged at a site where the simulated blood vessel 614a is not easily damaged, and the coloring reaction layer 616 need not be arranged at a site where the simulated blood vessel 614b is not easily damaged. The site that is not easily damaged is, for example, the deeper half side of the simulated blood vessel 614a, 614b.

While the configuration using the piezoelectric element as the actuator is employed in the embodiment, a configuration in which a liquid is ejected using an optical maser, or a configuration in which a liquid is pressurized by a pump or the like and thus ejected, may be employed. The configuration in which a liquid is ejected using an optical maser refers to the configuration in which a liquid is irradiated with an optical maser to generate air bubbles in the liquid, so that a pressure rise in the liquid caused by the generation of the air bubbles can be utilized.

## Claims

1. A simulated organ comprising:
a hollow simulated blood vessel; and
a coloring member which is arranged inside the simulated blood vessel and presents a different color from the simulated blood vessel at a damaged site of the simulated blood vessel.

2. The simulated organ according to claim 1, wherein the coloring member comprises an inner layer member formed in a different color from the simulated blood vessel.

3. The simulated organ according to claim 2, wherein the inner layer member has a higher strength than the simulated blood vessel.

4. The simulated organ according to any one of the preceding claims, wherein
the coloring member comprises a plurality of particles.

5. The simulated organ according to any one of the preceding claims, further comprising an inner layer member arranged inside the simulated blood vessel,
wherein the coloring member is arranged between the simulated blood vessel and the inner layer member.

6. The simulated organ according to any one of the preceding claims, wherein
the color presented by the coloring member is a fluorescent color.

7. The simulated organ according to any one of the preceding claims, wherein
the color presented by the coloring member is a color after color change due to a coloring reaction occurring after the simulated blood vessel is damaged.

8. The simulated organ according to any one of the preceding claims, wherein
a tensile residual stress in a circumferential direction is generated in the simulated blood vessel.

9. The simulated organ according to any one of the preceding claims, further comprising a simulated tissue filling peripheries of the simulated blood vessel,
wherein the simulated tissue is excised by a liquid provided with an excision capability.
